**Europäisches Patentamt**

**European Patent Office**

**Office européen des brevets**

(11) Veröffentlichungsnummer: **0 191 374 B1**

# (12) EUROPÄISCHE PATENTSCHRIFT

(45) Veröffentlichungstag der Patentschrift: **15.04.92**

(21) Anmeldenummer: **86101213.6**

(22) Anmeldetag: **30.01.86**

Teilanmeldung 89102369.9 eingereicht am 30/01/86.

(51) Int. Cl.⁵: **A01C 17/00**

(54) **Schleuderstreuer, insbesondere für gekörnte Düngemittel.**

(30) Priorität: **06.02.85 DE 3503905**
**05.10.85 DE 3535629**

(43) Veröffentlichungstag der Anmeldung:
**20.08.86 Patentblatt 86/34**

(45) Bekanntmachung des Hinweises auf die
Patenterteilung:
**15.04.92 Patentblatt 92/16**

(84) Benannte Vertragsstaaten:
**AT BE CH DE FR GB IT LI LU NL SE**

(56) Entgegenhaltungen:
EP-A- 0 074 155     EP-A- 0 080 239
EP-A- 0 088 480     EP-A- 0 117 005
WO-A-83/00978       DE-A- 1 457 851
DE-A- 1 457 877     DE-A- 1 914 337
DE-A- 1 945 076     DE-A- 2 132 041
DE-A- 2 624 490     DE-A- 2 739 733

(73) Patentinhaber: **Amazonen-Werke H. Dreyer
GmbH & Co. KG
Am Amazonenwerk 9-13
W-4507 Hasbergen-Gaste(DE)**

(72) Erfinder: **Dreyer, Heinz, Dipl.-Ing. Univ. Dr.
Am Amazonenwerk 7
W-4507 Hasbergen(DE)**
Erfinder: **Scheufler, Bernd, Dr.-Ing.
Am Amazonenwerk 101
W-4507 Hasbergen(DE)**

(74) Vertreter: **Patentanwälte Grünecker, Kinkeldey, Stockmair & Partner
Maximilianstrasse 58
W-8000 München 22(DE)**

EP 0 191 374 B1

## Beschreibung

Die Erfindung betrifft einen Schleuderstreuer, vorzugsweise Anbauschleuderstreuer insbesondere für gekörnte Düngemittel nach dem Oberbegriff des Anspruchs 1.

Ein Schleuderstreuer nach dem Oberbegriff des Anspruchs 1 ist aus der EP-A-0080239 bekannt. Der dort beschriebene Schleuderstreuer weist eine Schieberanordnung mit jeweils zwei Schiebern auf, wobei eine Verstellung der Schieber zueinander ermöglicht ist. Hierzu sind die Schieber an einen Hebelarm angeschlossen, bei dessen mechanischer Betätigung sich die Schieber verstellen lassen. In der Betriebsstellung werden die beiden Schieber zur Lagefixierung zueinander über einen Steckstift miteinander arretiert. Soll ein Verstellen vom Schleppersitz aus vorgenommen werden, so muß der Steckstift gelöst werden.

Aus der DE-PS 2818816 ist es bekannt, die Schieberanordnung eines Schleuderstreuers, die nur mit einem Schieber arbeitet, während der Fahrt vom Schleppersitz aus mittels einer Fernbedienungsvorrichtung in die Schließstellung und in jeweils lediglich eine Öffnungsstellung und zurück verstellen zu können. Diese Öffnungsstellung ist mit großer Genauigkeit durch eine in unmittelbarer Nähe des Schiebers an der Rückseite des Schleuderstreuers angebrachte, nur dort bei stillstehendem Schleuderstreuer verstellbare Feststelleinrichtung bestimmt. Es ist aber nicht möglich, die durch die Feststelleinrichtung bestimmte eine Öffnungsstellung des Schiebers während der Fahrt vom Schleppersitz aus zu verstellen und auf diese Weise den bekannten Schleuderstreuer durch Veränderung der Ausbringmenge in unterschiedliche Einsatzbedingungen anzupassen.

Gegenüber diesem Stand der Technik liegt der Erfindung die Aufgabe zugrunde, einen Schleuderstreuer der Eingangs genannten Art so weiterzubilden, daß er in einfacher und bequemer Weise mit großer Genauigkeit während der Fahrt vom Schleppersitz aus an unterschiedliche Einsatzbedingungen angepaßt werden kann.

Gelöst wird diese Aufgabe bei einem gattungsgemäßen Schleuderstreuer mit den im kennzeichnenden Teil des Anspruchs 1 beschriebenen Merkmalen.

Diese erfindungsgemäßen Maßnahmen ermöglichen es, den Schleuderstreuer mittels der Fernbedienungsvorrichtung während der Fahrt an unterschiedliche Einsatzbedingungen anzupassen. Beispielsweise können beide Schieber von der Schließstellung in die gleiche Öffnungsstellung verstellt werden, in welche eine der eingestellten Öffnungsweite der Auslauföffnung entsprechende Menge des auszubringenden Materials abgegeben wird. Ist es nun beispielsweise aufgrund veränderter Einsatzbedingungen erforderlich, eine kleinere Ausbringmenge abzugeben, dann kann einer der beiden Schieber in Richtung Schließstellung so weit verstellt werden, bis die entsprechende kleinere Öffnungsweite der Auslauföffnung eingestellt ist. Wird dieser Schieber nun zurück in beispielsweise seine größtmögliche Öffnungsstellung gebracht, dann ist die Schieberanordnung wieder auf die durch den anderen, zwischenzeitlich nicht bewegten Schieber bestimmte ursprüngliche größere Öffnungsweite der Auslauföffnung eingestellt. Eine Fehleinstellung dieser ursprünglichen Öffnungsweite ist somit nicht möglich.

Gemäß einer bevorzugten Weiterbildung der Erfindung wirken die Schieber jeder Schieberanordnung zur Festlegung der Öffnungsweite der Auslauföffnung zusammen und sind in eine Grundöffnungsstellung über die Fernbedienungsvorrichtung verstellbar. Des weiteren ist einer der Schieber mittels der Fernbedienungsvorrichtungen zumindest zwei zusätzlicher Öffnungsstellungen verstellbar, wobei die Öffnungsweiten der Auslauföffnungen in der einen zusätzlichen Öffnungsstellung kleiner und in der anderen zusätzlichen Öffnungsstellung größer als in der Grundöffnungsstellung sind. Auf diese Weise kann der Schleuderstreuer auch an Einsatzbedingungen angepaßt werden, die größere und kleinere Ausbringmengen erfordern.

Vorzugsweise umfaßt die Fernbedienungsvorrichtung ein erstes Bedienungselement zum Verstellen des ersten Schiebers in die Grundöffnungsstellung und ein zweites Bedienungselement zum Verstellen des zweiten Schiebers in die Grundöffnungsstellung und in die zusätzlichen Öffnungsstellungen. Auf diese Weise können beide Schieber unabhängig voneinander verstellt werden.

Es ist aber auch möglich, daß die Fernbedienungsvorrichtung ein erstes Bedienungselement zum Verstellen des ersten Schiebers in die Grundöffnungsstellung und ein zweites Bedienungselement zum Verstellen des zweiten Schiebers in die zusätzlichen Öffnungsstellungen umfaßt. Beide Schieber können dann gemeinsam in die Grundöffnungsstellung verstellt werden, wenn sie miteinander, beispielsweise durch ein Stellglied des zweiten Bedienungselementes, verbunden sind.

Das erste Bedienungselement kann einen in Richtung der Schließstellung wirkenden Hydraulikzylinder und eine in Richtung der Öffnungsstellung wirkende Zugfeder umfassen. Dabei ist das erste Bedienungselement vozugsweise zur schlagartigen schnellen Verstellung des ersten Schiebers ausgebildet.

Zur genaueren Festlegung der Grundöffnungsstellung der Schieberanordnung ist vorzugsweise eine verstellbare Anschlageinrichtung vorgesehen. Diese Anschlageinrichtung kann bei gemeinsam verstellbaren Schiebern als ein mit dem ersten Schieber zusammenwirkendes Anschlagelement ausgebildet sein. Bei unabhängig voneinander bewegbaren Schiebern ist die Anschlageinrichtung vorzugsweise als ein mit dem ersten Schieber zusammenwirkendes Anschlagelement und ein mit dem zweiten Schieber zusammenwirkender Anschlag ausgebildet.

Die Anschlagelemente für die Festlegung der Grundöffnungsstellung des ersten Schiebers und des zweiten Schiebers können an einer die Auslauföffnung enthaltenden Bodenplatte verstellbar befestigt sein.

Gemäß einer Weiterbildung der Erfindung ist eine zusätzliche verstellbare Anschlageinrichtung zur Festlegung der Zusätzlichen Öffnungsstellungen des zweiten Schiebers vorgesehen.

Vorzugsweise umfaßt die zusätzliche Anschlageinrichtung zwei zusätzliche, mit dem zweiten Schieber zusammenwirkende Anschlagelemente. Diese zusätzlichen Anschlagelemente können an der Bodenplatte, aber auch am ersten oder am zweiten Schieber verstellbar befestigt sein.

Es ist jedoch auch möglich, die zusätzliche Anschlageinrichtung in das die beiden Schieber verbindende Stellglied zu integrieren. Ein solches, für eine sehr genaue Einstellung der zusätzlichen Öffnungsweiten geeignetes Stellglied ist vorteilhafterweise als elektrischer Hubzylinder oder Stellmotor ausgebildet, mit dem darüber hinaus der zweite Schieber auch in Zwischenstellungen zwischen den zusätzlichen Öffnungssstellungen eingestellt werden kann.

Auch eine Ausbildung des Stellglieds als elektrische Hubmagnete oder hydraulischer Hubzylinder ist möglich. Vorzugsweise besitzen die Hubzylinder eine schnelle und eine langsame Betätigungsstufe, so daß beispielsweise die Verstellung des ersten Schiebers von der Schließ- in die Grundöffnungsstellung und zurück bei Beginn der Fahrt oder am Feldende schnell durchgeführt und die Verstellung des zweiten Schiebers in die zusätzlichen Öffnungsstellungen zur Erzielung eines langsamen Übergangs von der einen zur anderen Ausbringmenge langsam und kontinuierlich erfolgen kann.

Vorzugsweise sind beide Schieber direkt übereinander unter der Auslauföffnung angeordnet. Dadurch wird erreicht, daß fast das gesamte, auf der Schieberanordnung lastende Gewicht des auszubringenden Materials auf den direkt vor der Auslauföffnung angeordneten Schieber drückt, so daß der darunter befindliche Schieber mit geringer Kraft leicht hin- und herbewegt werden kann. Da der zweite Schieber häufiger als der erste Schieber verstellt werden muß, ist es günstig, ihn unterhalb des ersten Schiebers anzuordnen.

Gemäß einer Weiterbildung der Erfindung kann der zweite Schieber in Form eines Blendenelementes seitlich des ersten Schiebers angeordnet sein. Vorteilhaft hierbei ist, daß bei jeder Grundöffnungseinstellung des ersten Schiebers bzw. der entsprechenden Grundausbringmenge an Material pro Flächeneinheit eine prozentuale Vergrößerung und Verkleinerung der Ausbringmenge pro Flächeneinheit erreicht werden kann. Dazu können die Blendenelemente so ausgebildet bzw. verstellt werden, daß sich bei jeder Schieberstellung die gleiche prozentuale Vergrößerung und Verkleinerung der Ausbringmenge ergibt.

Gemäß einer besonders vorteilhaften Ausgestaltung der Erfindung ist der zweite Schieber in Form zweier seitlich der Auslauföffnung angeordneter Blendenelemente ausgebildet. Durch gemeinsame Verstellung dieser beiden Blendenelemente kann erreicht werden, daß die Flächenschwerpunkte bei jeder Öffnungsstellung des ersten Schiebers sich nicht verändern, so daß der Mengeneffekt ausgeschaltet bleibt, wenn die Blendenelemente verstellt werden.

Zur automatischen Verstellung des zweiten Schiebers aus den zusätzlichen Öffnungsstellungen zurück in die Grundöffnungsstellung ist vorteilhafterweise eine elastische Einrichtung zwischen beiden Schiebern angeordnet.

Zur kontinuierlichen Änderung der Ausbringmenge bei Verstellung der Schieberanordnung von der Grundöffnungsstellung in eine zusätzliche Öffnungsstellung ist es günstig, das zweite Bedienungselement zur stufenlosen und langsamen Verstellung des zweiten Schiebers auszubilden.

Um die Schieberanordnungen in besonders einfacher und bequemer Weise verstellen zu können, sind die Fernbedienungsvorrichtungen vorteilhafterweise von einem den Schleuderstreuer tragenden bzw. ziehenden Schlepper aus betätigbar. Um den Schleuderstreuer auch quer zur Fahrtrichtung an unterschiedliche Einsatzbedingungen anpassen zu können, ist es günstig, die den beiden Verteilorganen zugeordneten Schieberanordnungen mittels der jeweiligen Fernbedienungsvorrichtung unabhängig voneinander verstellbar auszubilden.

Vorteilhafterweise ist auf dem Schlepper wenigstens ein der Fernbedienungsvorrichtung zugeordnetes Anzeigeelement angebracht, mittels welchen beispielsweise die Stellung der Schieberanordnung und/oder die jeweils eingestellte Öffnungsweite der Auslauföffnung ablesbar ist. Der Schlepperfahrer ist somit jederzeit darüber informiert, welche Ausbringmenge abgegeben wird.

Im folgenden werden Ausführungsbeispiele der Erfindung anhand einer Zeichnung beschrieben. Es zeigen:

Fig. 1 einen erfindungsgemäßen Anbauschleuderstreuer in der Ansicht von hinten,

Fig. 2 den Schleuderstreuer in der Draufsicht und in Teilansicht in vergrößertem Maßstab,

Fig. 3 die linke Dosiereinheit des Schleuderstreuers in vergrößertem Maßstab und in der Draufsicht,

Fig. 4 eine andere Ausführung der Dosiereinheit des Schleuderstreuers ebenfalls in der Draufsicht,

Fig. 5 eine weitere Ausführung der Dosiereinheit des Schleuderstreuers ebenfalls in der Draufsicht,

Fig. 6 die Dosiereinheit gemäß Fig. 5 in der Ansicht VI-VI in vergrößertem Maßstab,

Fig. 7 eine weitere Ausführung einer Dosiereinheit in der Draufsicht und

Fig. 8 noch eine weitere Ausführung einer Dosiereinheit ebenfalls in der Draufsicht,

Fig. 9 die Dosiereinheit gemäß Fig. 8 in Teilansicht und vergrößertem Maßstab,

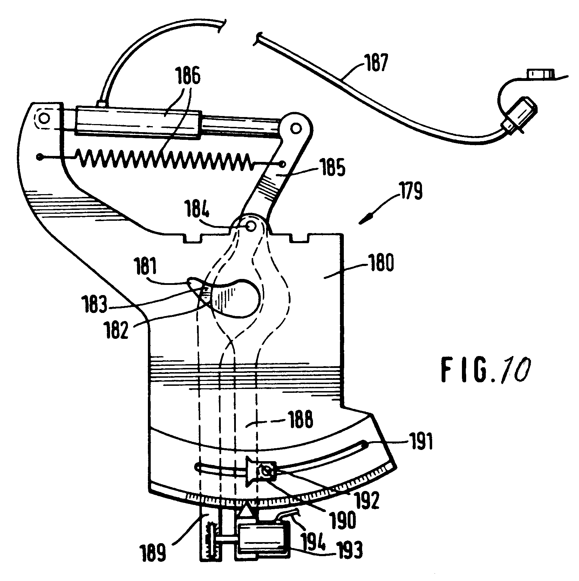

Fig. 10 eine weitere erfindungsgemäß ausgebildete Dosiereinheit eines Schleuderstreuers in der Draufsicht mit der Fernbedieungsvorrichtung.

Der als Anbauschleuderstreuer ausgebildete Schleuderstreuer weist einen Rahmen 1 auf, der auf seiner in Fahrtrichtung 2 vorderen Seite 3 mit nicht dargestellten Kupplungselementen zum Anbau an einen ebenfalls nicht dargestellten Schlepper ausgestattet ist. Ferner ist am Rahmen 1 ein Vorratsbehälter 4 befestigt, der zwei durch ein dachförmiges Mittelteil getrennte trichterförmige Behälterteile 5 aufweist. Die trichterförmigen Behälterteile 5 weisen jeweils eine lösbare Bodenplatte 6 auf, welche an den an den Behälterteilen 5 angeschweißten Anschlußelementen 7 mit Schnellverschlüssen 8 befestigt sind. Unterhalb der Bodenplatte 6 ist jeweils ein als Schleuderscheibe 9 ausgebildetes Verteilorgan angeordnet, das über das Getriebe 10 von der Schlepperzapfwelle angetrieben wird.

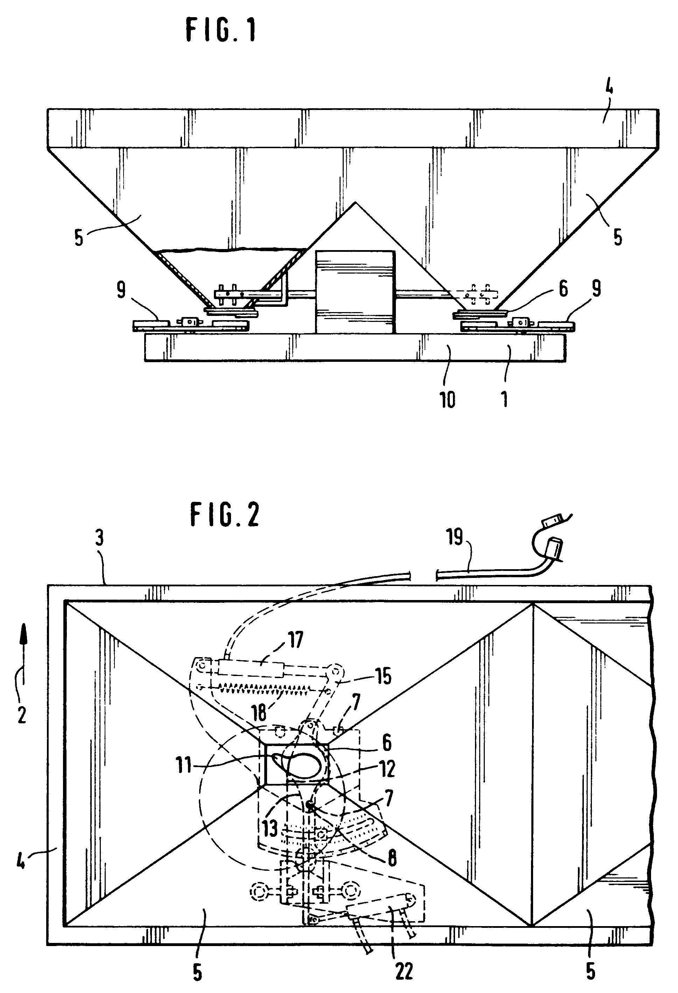

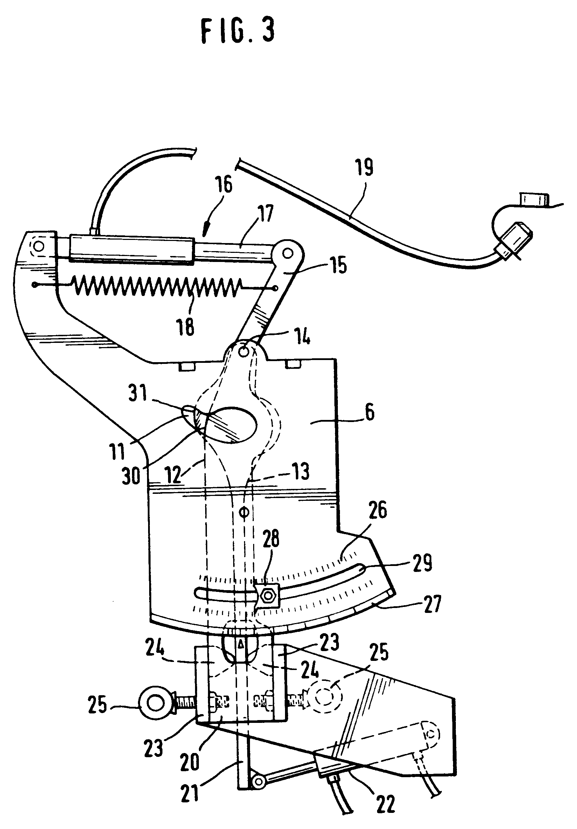

Die Bodenplatten 6 sind als Dosierorgan ausgebildet . In jeder Bodenplatte 6 befindet sich jeweils eine Auslauföffnung 11, deren Öffnungsweite durch eine unter der Bodenplatte 6 und vor der Auslauföffnung 11 angeordnete Schieberanordnung bestehend aus einem ersten Schieber 12 und einem zweiten Schieber 13 mittels je einer Fernbedienungsvorrichtung eingestellt werden kann. Gemäß dem Ausführungsbeispiel der Fig. 2 und 3 sind unterhalb jeder Bodenplatte 6 die beiden Schieber 12 und 13 auf einem Bolzen 14 schwenkbar angeordnet. Direkt unter der Bodenplatte 6 befindet sich der Schieber 12. Unter dem Schieber 12 ist der Schieber 13 angeordnet, so daß sich der Schieber 12 zwischen der Bodenplatte 6 und dem Schieber 13 befindet. Ein Bedienungshebel 15 des Schiebers 12 ragt nach vorn über den Bolzen 14 hinaus. An diesem über den Bolzen 14 hinausragenden Bedienungshebel 15 ist als Teil der jeweiligen Fernbedienungsvorrichtung ein erstes Bedienungselement 16 angeordnet. Dieses erste Bedienungselement 16 ist als einfach wirkender Hydraulikzylinder 17 und als eine dem Hydraulikzylinder 17 entgegenwirkende Zugfeder 18 ausgebildet. Der Hydraulikzylinder 17 und die Zugfeder 18 sind an der Bodenplatte 6 befestigt. Der jeweilige Hydraulikzylinder 17 ist über einen Hydraulikschlauch 19 an die Hydraulikanlage eines Schleppers angeschlossen und kann über Steuergeräte von dort aus vom Schlepperfahrer betätigt werden.

Die Fernbedienungsvorrichtung weist noch ein zweites Bedienungselement auf, das ein Stellglied in Form eines Hydraulikzylinders 22 und diesen an eine Hydraulikanlage des Schleppers anschließende Hydraulikschläuche umfaßt.

Der Schieber 12 weist auf seiner dem Bedienungshebel 15 abgewandten Seite ein Verlängerungsstück 20 auf. Der Schieber 13 besitzt ebenfalls einen Bedienungshebel 21, der sich bis über das Verlängerungsstück 20 hinaus erstreckt. Zwischen dem Bedienungshebel 21 und dem Verlängerungsstück 20 ist der doppelt wirkende Hydraulikzylinder 22 angeordnet. Dieser Hydraulikzylinder kann über die Hydraulikschläuche vom Schleppersitz aus vom Schlepperfahrer über Steuergeräte betätigt werden. Auf beiden Seiten des Bedienungshebels 21 sind an dem Verlängerungsstück 20 des Schiebers 12 jeweils aufrecht stehende Bleche 23 angeschweißt. An diesen Blechen 23 ist eine elastische Einrichtung in Form zweier Gummipuffer 24 befestigt. Diese Gummipuffer 24 liegen an dem Bedienungshebel 21 des Schiebers 13 an, so daß sie den Bedienungshebel 21 und somit den Schieber 13 in einer genau definierten Lage gegenüber dem Schieber 12 halten bzw. fixieren, wenn der Hydraulikzylinder 22 drucklos geschaltet ist. An der Bodenplatte 6 befinden sich noch zwei Einstellskalen 26 und 27 und eine verstellbare Anschlageinrichtung in Form eines Anschlagelementes 28 für die Festlegung der Grundöffnungsstellung des Schiebers 12. Das Anschlagelement 28 ist in einem Langloch 29 verstellbar. An diesem Anschlagelement 28 liegt das Verlängerungsstück 20 des Schiebers 12 an, wenn die Schieber sich in ihrer Öffnungsstellung befinden. Weiterhin ist eine zusätzliche Anschlageinrichtung in Form zweier als verstellbare Schrauben 25 ausgebildeter und an den Blechen 23 befestigter zusätzlicher Anschläge zur Festlegung zweier zusätzlicher Öffnungsstellungen des Schiebers 13 vorgeshen. Die Einstellskala 26 ist für die Grundöffnungsstellung vorgesehen und weist eine lineare Teilung auf. Anhand dieser Einstellskala in Verbindung mit den Werten einer Streutabelle kann das Anschlagelement 28 eingestellt werden. Die Einstellskala 27 weist eine prozentuale Teilung auf, so daß jeweils Ausbringmengenwerte eingestellt werden können, die prozentual größer und kleiner als der Grundmengenwert sind.

Diese größeren und kleineren Ausbringmengenwerte werden durch die Einstellung der Schrauben 25 festgelegt. Durch die prozentuale Einteilung der Skala braucht der Landwirt jeweils nicht den Änderungswert errechnen, wenn er beispielsweise 10% mehr oder weniger errechnen, wenn er beispielsweise 10% mehr oder weniger als den Grundmengenwert ausbringen will.

Die die Auslauföffnung 11 freigebende Kante 30 des Schiebers 12 springt gegenüber der Kante 31 des Schiebers 13 etwas zurück. Somit kann durch Verstellen des Schiebers 13 gegenüber dem Schieber 12 mit Hilfe des Hydraulikzylinders 22 jeweils ein kleinerer und ein größerer Ausbringmengenwert während des Ausbringvorganges eingestellt werden.

Die Veränderung der Ausbringmenge pro Flächeneinheit während des Ausbringvorganges und während der Fahrt geschieht folgendermaßen:

Zunächst stellt der Landwirt anhand der Streutabelle das Anschlagelement 28 so ein, daß dessen Zeiger auf den aus der Streutabelle entnommenen Wert der Skala 26 zeigt. In der in Fig. 3 eingezeichneten Stellung befinden sich die Schieber 12 und 13 in Betriebsstellung; d.h. in einer Öffnungsstellung. In dieser beispielhaft eingezeichneten Stellung wird nur ein relativ kleiner Querschnitt der Auslauföffnung freigeben, so daß eine relativ kleine Ausbringmenge ausgebracht wird. Über den Hydraulikzylinder 17 werden die Schieber 12 und 13 betätigt. Wenn der Hydraulikzylinder 17, wie in dem hier dargestellten Fall, drucklos geschaltet ist, zieht die Zugfeder 18 die beiden Schieber in ihre (eingezeichnete) Öffnungsstellung. Wenn nun der Hydraulikzylinder 17 mit Druck beaufschlagt wird, so wird die Auslauföffnung geschlossen, indem die Schieber in ihre Schließstellung bewegt werden und die Auslauföffnung abdecken. In der Betriebsstellung liegt der Schieber 12 mit seinem Verlängerungsstück 20 an dem Anschlagelement 28 an und befindet sich somit in seiner geschaltet ist, befindet sich der Schieber 13 ebenfalls in seiner Grundöffnungsstellung in der er von den Gummipuffern 24 gehalten wird. In der Grundöffnungsstellung als auch in den zusätzlichen Öffnungsstellungen bestimmen beide Schieber 12, 13 gemeinsam die Öffnungsweite der Auslauföffnung.

Mit Hilfe der Schrauben 25 kann der Landwirt nun vor Beginn der Arbeit einen größeren und einen kleineren Ausbringmengenwert gegenüber dem der Grundöffnungsstellung entsprechenden Grundausbringmengenwert einstellen. Hierbei ist von besonderem Vorteil, daß die Skala 27 eine prozentuale Einteilung aufweist. So braucht der Landwirt nur den Schieber 13 jeweils nur soweit zu bewegen, bis der auf dem Bedienungsebel 21 angeordnete Zeiger mit dem gewünschten größeren und kleineren Ausbringmengenänderungswert übereinstimmt. Diese beiden Extremstellungen des Schiebers 13 werden durch die Einstellschrauben 25 entsprechend eingestellt.

Auf dem Acker werden am Feldende die Auslauföffnungen dadurch geöffnet, daß die Hydraulikzylinder 17 über die auf dem Schlepper befindlichen Steuergeräte drucklos geschaltet werden. Schlagartig ziehen die Zugfedern 18 die jeweiligen Schieber 12 und 13 in ihre eingestellte Grundöffnungsstellung, so daß das Verlängerungsstück 20 am Anschlagelement 28 anliegt. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er das entsprechende Steuergerät, so daß der Hydraulikzylinder 22 entsprechend betätigt wird. Über diesen Hydraulikzylinder 22 wird dann der Schieber 13 gegenüber dem Schieber 12 bewegt, so daß entsprechend der Betätigung des Hydraulikzylinders 22 ein kleinerer oder ein größerer Öffnungsquerschnitt gegenüber der Grundöffnungsstellung eingestellt wird. Soll anschließend wieder die eingestellte Grundmenge ausgebracht werden, so wird der Hydraulikzylinder 22 vom Landwirt über das entsprechende Steuergerät drucklos geschaltet. Jetzt drücken die Gummipuffer 24 den Schieber 13 wieder in seine Grundöffnungsstellung. Somit ist also der durch den Schieber 13 freigegebene Öffnungsquerschnitt der Auslauföffnung 11 während des Einsatzes des Streuers über das als Hydraulikzylinder 22 ausgebildete zweite Bedienungselement der Fernbedienungsvorrichtung derart veränderbar, daß ein kleinerer und ein größerer Öffnungsquerschnitt gegenüber der Grundöffnungsstellung einstellbar ist, so daß eine kleinere und eine größere Ausbringmenge (Öffnungsweite der Auslauföffnung) jeweils einstellbar ist. Der Schieber 13 ist somit gegenüber dem ersten Bedienungselement 16 mit Hilfe des als Hydraulikzylinder 22 ausgebildeten zweiten Bedienungselementes hin- und herbewegbar.

Wichtig ist, daß die Kante 30 des Schiebers 12 zumindest gegenüber der Kante 31 des Schiebers 13 soweit zurückspringt, daß in der größten Verstellung des Schiebers 13 die Kante 30 des Schiebers 12 die Kante 31 des Schiebers 13 nicht überragt. Nur so kann dann auch tatsächlich die gewünschte größere Ausbringmenge gegenüber dem Grundmengenwert ausgebracht werden.

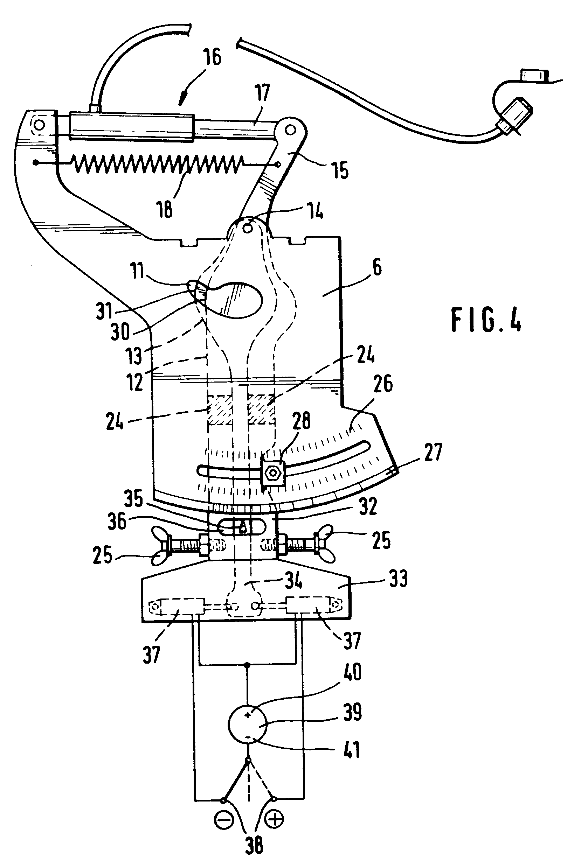

Die Ausführung der Dosiereinheit gemäß Fig. 4 unterscheidet sich von der Dosiereinheit gemäß Fig. 3 im wesentlichen durch die andere Ausbildung der Fernbedienungsvorrichtung für die Einstellung der kleineren und größeren Ausbringmenge pro Flächeneinheit gegenüber der Grundausbringmenge. Unter der Bodenplatte 6 sind die beiden Schieber 12 und 13 an dem Bolzen 14 schwenkbar angeordnet. Der Schieber 12, dessen Kante 30 gegenüber der Kante 31 des Schiebers 13 zurückspringt, ist direkt unter der Bodenplatte 6 angeordnet. Unter diesen Schiebern 12 befinden sich dann die Schieber 13. Der Bedienungshebel 15 ragt über den Bolzen 14 hinaus. Zwischen diesem Bedienungshebel 15 und der Bodenplatte 6 ist das erste Bedienungselement 16 angeordnet, das als Zugfeder 18 und Hydraulikzylinder 17 ausgebildet ist. Über den Hydraulikzylinder 17 in Verbindung mit der Zugfeder 18 werden die Schieber 12 und 13 jeweils in ihre Schließ- bzw. Öffnungsstellung gebracht. Der Schieber 12 weist an seiner dem Bedienungshebel 15 gegenüberliegenden Seite ein Verlängerungsstück 32 mit einem Querstück 33 an seinem Ende auf. Der Schieber 13 besitzt einen Bedienungshebel 34, der bis zu dem Querstück nach hinten ragt. Weiterhin sind an den Verlängerungsstück 32 die beiden Gummipuffer 24 beidseits des Bedienungshebels 34 angeordnet, die den Bedienungshebel in einer Stellung exakt fixieren. Schließlich weist der Bedienungshebel noch einen Zeiger 35 auf, der durch eine Öffnung 36 in dem Verlängerungsstück 32 ragt. Dieser Zeiger 35 befindet sich in dem Bereich der Prozentskala 27, die an der Bodenplatte 6 angeordnet ist. Zwischen dem Querstück 33 des Schiebers 12 und dem Bedienungshebel 34 des Schiebers 13 ist das Stellglied des zweiten Bedienungselementes in Form zweier elektrischer Hubmagnete 37 angeordnet. Das zweite Bedienungselement umfaßt noch eine schematisch angedeutete elektrische Spannungsanlage 38 des Schleppers, mit der die Hubmagnete 37 verbunden sind. Über einen Schalter 39 werden die Hubmagnete 39 entsprechend betätigt. Wenn der Schalter 39 auf das Plussymbol 40 geschaltet ist, wird die größere Ausbringmenge und wenn der Schalter 39 auf das Minussymbol geschaltet ist, wird die kleinere Ausbringmenge ausgebracht. Außerdem kann der Schalter 39 auch noch in eine Neutralstellung geschaltet werden, so daß die Hubmagnete 37 spannungslos geschaltet sind.

Damit die Schieber 12 und 13 von den Hubmagneten 37 sehr leicht gegeneinander hin- und herbewegt bzw. der Schieber 13 immer wieder von den Gummipuffern 24 bei der Spannunglosen Schaltung der Hubmagnete exakt wieder in die Grundstellung gegenüber dem Schieber 13 gedrückt wird, ist der direkt vor der Auslauföffnung 11 angeordnete Schieber 12 in axialer Richtung gegenüber der Bodenplatte 6 auf dem Bolzen 14 mittels eines Sicherungselementes fixiert. Außerdem ist das hintere Ende des Schiebers 12 an der Bodenplatte gelagert. Somit wird dieser Schieber 12 direkt vor der Auslauföffnung 11 gehalten und das auf diesem Schieber 12 lastende Gewicht des Materiales wirkt nicht auf den Schieber 13 ein.

Weiterhin befindet sich zwischen den Schiebern 12 und 13 innerhalb ihrer projizierten Berührungsfläche ein kleiner Spalt. Schließlich befindet sich auf den beiden Berührungsflächen der Schieber 12 und 13 ein Material, welches einen kleinen Reibwiderstand aufweist.

Die Veränderung der Ausbringmenge pro Flächeneinheit während des Ausbringvorganges und während der Fahrt geschieht folgendermaßen.

Das Öffnen und Schließen der Auslauföffnung geschieht sehr schnell über das erste Bedienungselement 16. Die Grundöffnungsstellung der Schieber 12 und 13 wird durch das Anschlagelement 28 bestimmt. Der Schieber 13 gibt dann die durch das Anschlagelement 28 festgelegte Grundöffnungsweite der Auslauföffnung 11 frei, wenn der Hydraulikzylinder 17 drucklos geschaltet ist und die Zugfeder 18 dann schlagartig die Schieber 12 und 13 bewegt, so daß das Verlängerungstück 32 an dem Anschlagelement 28 zur Anlage kommt. Die Festlegung der exakten kleineren und größeren Ausbringmengen wird durch die Einstellschrauben 25 bestimmt.

Bevor der Landwirt den Vorratsbehälter 4 mit Material füllt, muß der Schieber 12 bzw. 13 über den Hydraulikzylinder 17 in seine Schließstellung gebracht werden, so daß die Schieber 12 und 13 die Auslauföffnung vollkommen abdecken. Am Feldanfang wird das Steuergerät betätigt, so daß der Hydraulikzylinder 17 drucklos geschaltet wird. Durch die Zugfeder 18 werden die Schieber 12 und 13 schlagartig in ihre Öffnungsstellung gezogen. Wenn nun während der Feldüberfahrt aufgrund der Einsatzverhältnisse die Ausbringmenge vergrößert werden soll, so wird der Schalter 39 so gestellt, daß er auf das Plussymbol, zeigt. Hiedurch werden die Hubmagnete 37 so geschaltet, daß der Schieber 13 gegenüber den Schiebern 12 nach rechts bewegt wird bis er an der Schraube 25 anliegt und somit eine größere Fläche der Auslauföffnung freigibt. Soll dann nach einiger Zeit wieder die Grundmenge ausgebracht werden, so ist lediglich der Schalter 39 vom Schlepperfahrer in seine Neutralstellung zu bringen, so daß die Hubmagnete 37 spannungslos geschaltet werden. Dann drücken die Gummipuffer 24 den Schieber 13 wieder in seine Grundstellung. Wenn dann eine kleinere Ausbringmenge während der Feldüberfahrt ausgebracht werden soll, weil dies die Einsatzbedingungen erfordern, so wird der Schalter 39 in eine Stellung gebracht, daß der Schalter auf das Minussymbol zeigt. Jetzt bewegen die Hubmagnete 37 den Schieber 13 nach links, so daß eine kleinere Öffnungsweite der Auslauföffnung freigegeben wird. Wenn dann wieder die Grundmenge ausgebracht weren soll, so wird der Schalter 39 wieder in seine Neutralstellung gebracht, so daß die Hubmagnete 37 spannungslos geschaltet sind. Auch in diesem Fall drücken dann die Gummipuffer 24 den Schieber 13 wieder in seine Grundstellung gegenüber dem Schieber 12.

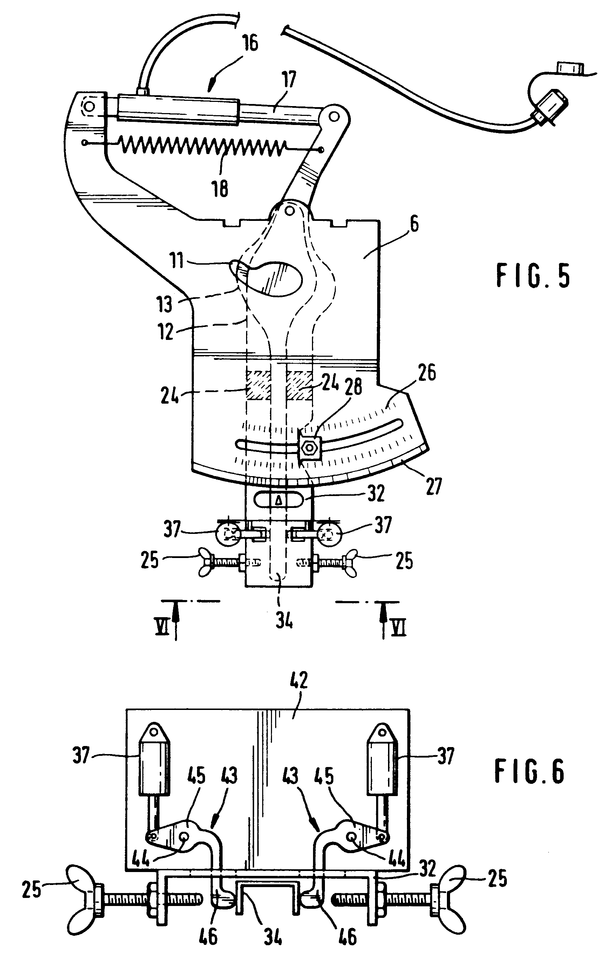

Die Dosiereinheit gemäß den Fig. 5 und 6 unterscheidet sich von der Dosiereinheit gemäß Fig. 4 lediglich durch eine andere Anordnung und Zuordnung der Hubmagnete 37 zu den Schiebern 12 und 13. An dem Ende des Verlängerungsstükkes 32, welches dem Schieber 12 zugeordnet ist, ist eine stehende Konsole 42 angeschweißt. An dieser Konsole 42 sind die Hubzylinder 37 hängend in einem geschützten und gut zugänglichen Bereich angeordnet. Zudem hat die hängende Anordnung der Hubmagnete 37 den Vorteil, daß keine Feuchtigkeit und keine Düngemittel in das Innere der Hubmagnete eintreten können. Die Hubmagnete 37 wirken über Kipphebel 43 auf den Bedienungshebel 34. Die Kipphebel 43 sind auf je einem an der Konsole 42 angeschweißten Bolzen 44 gelagert. Die Kipphebel 43 weisen jeweils unterschiedlich lange Hebelarme 45 und 46 auf. An dem kürzeren Hebelarm 45 ist jeweils das als Hubmagnet 37 ausgebildete Stellglied des zweiten Bedienungselementes der Fernbedienungsvorrichtung angeordnet und der längere Hebelarm 46 wirkt auf den Bedienungshebel 34 des Schiebers 13 ein. Die Funktion und Verstellung des Schiebers 13 gegenüber dem Schieber 12 bzw. dem Anschlagelement 28, welches die Grundöffnungsstellung festlegt, erfolgt über die Hubmagnete 37 entsprechend dem Ausführungsbeispiel gemäß Fig. 4.

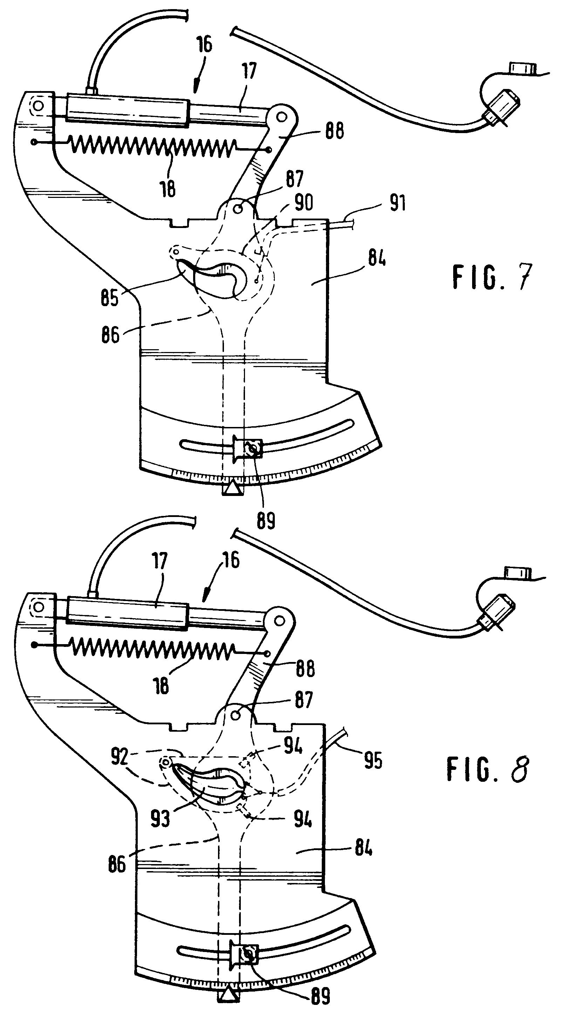

Die Dosiereinheit gemäß Fig. 7 ist ebenfalls in einfacher Weise unter den Behälterteilen 5 des Vorratsbehälters 4 des Anbauschleuderstreuers anzuordnen. Diese Dosiereinheit weist eine Bodenplatte 84 mit einer Auslauföffnung 85 auf. Unter der Bodenplatte 84 ist ein erster Schieber 86 an einem Bolzen 87 angeordnet. Der Schieber 86 weist einen über den Bolzen 87 hinausragenden Bedienungshebel 88 auf. Zwischen dem Bedienungshebel 88 und der Bodenplatte 84 ist das erste Bedienungselement 16 angeordnet. Das erste Bedienungselement 16 weist den Hydraulikzylinder 17 und die Zugfeder 18 auf. Über das erste Bedienungselement 16 wird der Schieber 86 jeweils in seine Schließ- bzw. Öffnungsstellung gebracht. Die Grundöffnungsstellung des Schiebers 86 wird durch ein an der Bodenplatte 84 einstellbar angeordnetes Anschlagelement 89 bestimmt.

Zwischen der Bodenplatte 84 und dem Schieber 86 ist seitlich der Auslauföffnung 85 ein zweiter, als Blendenelement ausgebildeter Schieber 90 angeordnet. Dieses Blendenelement 90 ist über ein als Bowdenzug 91 ausgebildetes zweites Bedienungselement der Fernbedienungsvorrichtung zu verschwenken. Das Blendenelement 90 kann drei verschiedene, durch nicht dargestellte Anschläge, bestimmte Stellungen einnehmen, so daß durch Verstellen des Blendenelementes 90 eine Grundausbringmenge Material pro Flächeneinheit sowie eine kleinere und eine größere Ausbringmenge Material pro Flächeneinheit bei jeder Stellung des Schiebers 86 über die Fernbedienungsvorrichtung 91 einzustellen sind.

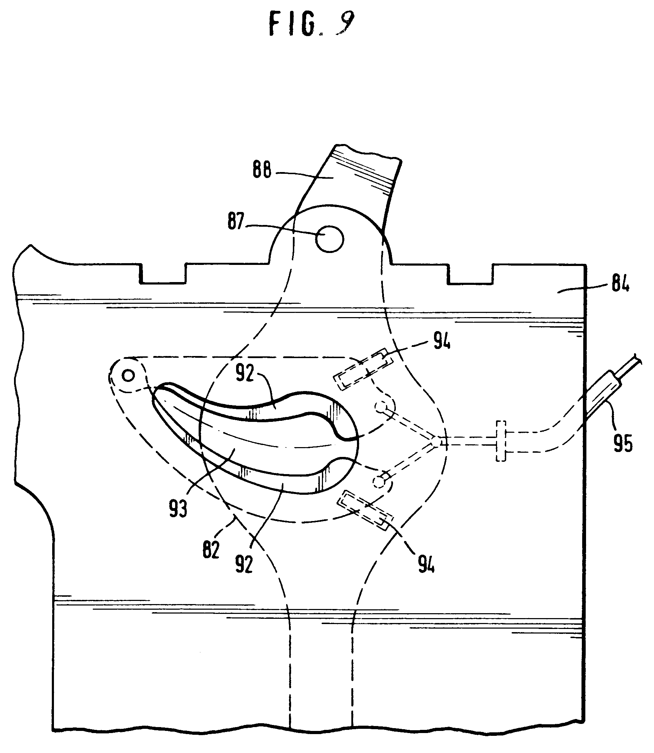

Die Dosiereinheit gemäß den Fig. 8 und 9 unterscheidet sich von der Dosiereinheit gemäß der Fig. 7 durch die Anordnung zweier Blendenelemente 92 beidseits einer Auslauföffnung 93. Entsprechend ihrer jeweiligen Einstellung decken die Blendenelemente 92 jeweils einen entsprechenden Teil der Auslauföffnung 93 beidseitig ab. An der Bodenplatte 84 sind in dem Bereich der Blendenelemente 92 einstellbare Anschläge 94 angeordnet. Jedem Blendenelement 92 ist ein Anschlag 94 zugeordnet. Die Anschläge 94 bestimmen drei Positionen der Blendenelemente 92 jeweils exakt. Die Positionen sind die Grundöffnungsstellung sowie eine Minimal- und eine Maximaleinstellung. Die den zweiten Schieber bildenden Blendenelemente 92 sind gemeinsam über das an ihnen angeschlossene zweite Bedienungselement 95 der Fernbedienungsvorrichtung, das als Bowdenzug ausgebildet ist, verstellbar. Über die Verstellung der Blendenelemente 92 ist die Ausbringmenge pro Flächeneinheit zu verändern, ohne daß über das erste Bedienungselement 16 der erste Schieber 86 verstellt wird. Mit dem Bedienungselement 16 wird der erste Schieber 86 ausschließlich nur in eine Schließstellung bzw. Grundöffnungsstellung bewegt, wobei die Grundöffnungsstellung des Schiebers 86 von dem Anschlagelement 89 bestimmt wird. Durch die gleichzeitige Verstellung der beiden Blendenelemente 92 bleibt die Linie, auf der sich der Flächenschwerpunkt der jeweiligen Öffnungsweite bei unterschiedlichen Öffnungsstellungen des Schiebers 86 verschiebt, immer erhalten. Hierdurch wird immer die gleiche Lage des Streufächers beibehalten; der Mengeneffekt tritt nicht auf.

Die Ausführung der Fernbedienungsvorrichtung ist nicht auf die in den Ausführungsbeispielen beschriebenen Ausführungsformen beschränkt. Die Fernbedienungsvorrichtungen können Bowdenzüge, hydraulische Hubzylinder, elektrische Hubzylinder, elektrische Stellmotore etc. umfassen.

Es soll noch darauf hingewiesen werden, daß die Anordnung der Einstellskalen an den Bodenplatten sehr große Vorteile hat. Hierdurch ist es möglich, daß die Schieber bereits vor der Montage der Bodenplatten an die Vorratsbehälter exakt eingestellt bzw. einjustiert werden können. Die Toleranzen zwischen den Schiebern und dem Rahmen bzw. Vorratsbehälter wirken sich nicht auf die exakte Einstellung der Schieber aus. Weiterhin ist es in vorteilhafter Weise möglich, daß der jeweilige Dosiermechanismus jeweils genau einjustiert werden kann und somit getrennt von der Maschine versandt und verpackt werden kann. Auch ist keine besondere neue Einjustierung zwischen den Schiebern und der Maschine erforderlich, wenn die verschiedenen Dosiermechanismen jeweils an den Vorratsbehälter angeordnet werden. Jeder Dosiermechanismus ist komplett abzunehmen und braucht nicht auf Skalen, die sich an der Maschine befinden, eingestellt zu werden.

**Patentansprüche**

1. Schleuderstreuer, vorzugsweise Anbauschleuderstreuer insbesondere für gekörnte Düngemittel, mit einem Auslauföffnungen (11) aufweisenden Vorratsbehälter (4) und einer Verteileinrichtung mit zwei angetriebenen Verteilorganen (9), denen die auszubringenden Materialien über zumindest je eine mit zumindest einer einen ersten (12, 86, 182) und einen zweiten Schieber (13, 90, 92, 183) umfassenden Schieberanordnung verschließbare und auf verschiedene Öffnungsweiten einstellbare Auslauföffungen (11) zuführbar sind, wobei die Schieber relativ zueinander verstellbar sind und mit Hilfe einer Fernbedienungsvorrichtung in die Schließstellung und in Öffnungsstellungen verstellbar sind,
   **dadurch gekennzeichnet,**
   daß die Fernbedienungsvorrichtung Bowdenzüge oder hydraulisch der elektrisch betätigbare Hubzylinder oder elektrische Stellmotore umfaßt, um die Schieber vom Schleppersitz aus während der Fahrt relativ zueinander verstellen zu können,
   daß ein mechanisch einstellbares Element (28) vorhanden ist, das die maximale Öffnungsstellung des ersten Schiebers (12) festlegt, daß elastische Elemente (24) oder Anschläge vorhanden sind, die den zweiten Schieber (13) bei Festlegung der Grundöffnungsweite der Auslauföffnung (11) derart festlegen, daß er eine unterhalb der Auslauföffnung (11) liegende, die Öffnungsweite der Auslauföffnung mitbestimmende Schieberkante aufweist und daß durch Relativverstellung des zweiten Schiebers die Öffnungsweite der Auslauföffnung vergrößerbar oder verkleinerbar ist.

2. Schleuderstreuer nach Anspruch 1, **dadurch gekennzeichnet,** daß die Schieber (12,13; 86,90,92; 182, 183) jeder Schieberanordnung zur Festlegung der Öffnungsweite der Auslauföffnung (11; 85; 93; 181) zusammenwirken und über die Fernbedienungsvorrichtung in eine Grundöffnungsstellung verstellbar sind und daß einer der Schieber (13; 90, 92; 183) mittels der Fernbedienungsvorrichtung in zumindest zwei zusätzliche Öffnungsstellungen verstellbar ist, wobei die Öffnungsweiten der Auslauföffnungen in der einen zusätzlichen Öffnungsstellung kleiner und in der anderen größer als in der Grundöffnungsstellung sind.

3. Schleuderstreuer nach Anspruch 2, **dadurch gekennzeichnet,** daß die Fernbedienungsvorrichtung (16, 18, 19; 22; 37 bis 41; 186, 187; 193, 194) ein erstes Bedienungselement (16, 18, 19; 186, 187) zum Verstellen des ersten Schiebers (12; 86; 182) in die Grundöffnungsstellung und ein zweites Bedienungselement (22; 37 bis 41; 193, 194) zum Verstellen des zweiten Schiebers (13; 183) in die zusätzlichen Öffnungsstellungen umfaßt.

4. Schleuderstreuer nach Anspruch 3, **dadurch gekennzeichnet,** daß das erste Bedienungselement (16, 18, 19; 186) ein in Richtung der Schließstellung der Schieberanordnung wirkender Hydraulikzylinder (16) und eine in Richtung der Öffnungsstellung der Schieberanordnung wirkende Zugfeder (18) umfaßt.

5. Schleuderstreuer nach wenigstens einem der Ansprüche 3 bis 4, **dadurch gekennzeichnet,** daß das zweite Bedienungselement (91, 95) als Bowdenzug ausgebildet ist.

6. Schleuderstreuer nach wenigstens einem der Ansprüche 3 bis 5, **dadurch gekennzeichnet,** daß das zweite Bedienungselement (22; 37 bis 41; 193, 194) ein Stellglied (22; 37; 193) umfaßt.

7. Schleuderstreuer nach Anspruch 6, **dadurch gekennzeichnet,** daß das Stellglied (22; 37; 193) beide Schieber (12, 13; 182, 183) miteinander verbindet.

8. Schleuderstreuer nach wenigstens einem der Ansprüche 2 bis 7, **dadurch gekennzeichnet,** daß eine verstellbare Anschlageinrichtung (28; 89; 94; 190) zur Festlegung der Grundöffnungsstellung der Schieberanordnung (12, 13; 86, 92; 182, 183) vorgesehen ist.

9. Schleuderstreuer nach Anspruch 8, **dadurch gekennzeichnet,** daß die Anschlageinrichtung (28; 89; 190) als ein mit dem ersten Schieber (12; 86; 182) zusammenwirkendes Anschlagelement (28; 89; 190) ausgebildet ist.

10. Schleuderstreuer nach Anspruch 8, **dadurch gekennzeichnet,** daß die Anschlageinrichtung (94) als ein mit dem ersten Schieber (86) zusammenwirkendes Anschlagelement (94) und ein mit dem zweiten Schieber (92) zusammenwirkender Anschlag (94) ausgebildet ist.

11. Schleuderstreuer nach wenigstens einem der Ansprüche 8 bis 10, **dadurch gekennzeichnet,** daß die Anschlageinrichtung (28; 89; 94; 190) an einer die Auslauföffnung (11; 85; 93; 181) enthaltenden Bodenplatte (6; 84; 180) verstellbar befestigt ist.

12. Schleuderstreuer nach wenigstens einem der Ansprüche 2 bis 11, **dadurch gekennzeichnet**, daß eine zusätzliche verstellbare Anschlageinrichtung (25; 94) zur Festlegung der zusätzlichen Öffnungsstellungen des zweiten Schiebers (13; 90; 92) vorgesehen ist.

13. Schleuderstreuer nach Anspruch 12, **dadurch gekennzeichnet,** daß die zusätzliche Anschlageinrichtung (25; 94) zwei zusätzliche, mit dem zweiten Schieber (13; 92) zusammenwirkende Anschlagelemente (25; 94) umfaßt.

14. Schleuderstreuer nach Anspruch 13, **dadurch gekennzeichnet,** daß die zusätzlichen Anschlagelemente (94) an der Bodenplatte (84) verstellbar befestigt sind.

15. Schleuderstreuer nach Anspruch 12, **dadurch gekennzeichnet,** daß die zusätzlichen Anschlagelemente (25) am ersten Schieber (12) oder am zweiten Schieber (13) verstellbar befestigt sind.

16. Schleuderstreuer nach wenigstens einem der Ansprüche 6 bis 15, **dadurch gekennzeichnet,** daß das Stellglied (193) als elektrischer Hubzylinder oder Stellmotor ausgebildet ist.

17. Schleuderstreuer nach wenigstens einem der Ansprüche 6 bis 16, **dadurch gekennzeichnet**, daß das Stellglied (23) als hydraulischer Hubzylinder ausgebildet ist.

18. Schleuderstreuer nach Anspruch 16 oder 17, **dadurch gekennzeichnet,** daß die Hubzylinder zwei unterschiedliche Betätigungs geschwindigkeiten aufweisen.

19. Schleuderstreuer nach wenigstens einem der Ansprüche 6 bis 18, **dadurch gekennzeichnet,** daß das Stellglied als elektrische Hubmagnete (37) ausgebildet ist.

20. Schleuderstreuer nach wenigstens einem der Ansprüche 1 bis 19, **dadurch gekennzeichnet**, daß beide Schieber (12, 13; 182, 183) direkt übereinander unter der Auslauföffnung (11, 181) angeordnet sind.

21. Schleuderstreuer nach wenigstens einem der Ansprüche 1 bis 19, **dadurch gekennzeichnet**, daß der erste Schieber (12; 182) zwischen dem zweiten Schieber (13; 183) und der Auslauföffnung (11; 181) angeordnet ist.

22. Schleuderstreuer nach wenigstens einem der Ansprüche 1 bis 19, **dadurch gekennzeichnet**, daß der zweite Schieber in Form eines Blendenelementes (90) seitlich der Auslauföffnung (85) angeordnet ist.

23. Schleuderstreuer nach wenigstens einem der Ansprüche 1 bis 19, **dadurch gekennzeichnet**, daß der zweite Schieber in Form zweier seitlich der Auslauföffnung (93) angeordneter Blendenelemente (92) ausgebildet ist.

24. Schleuderstreuer nach wenigstens einem der Ansprüche 1 bis 21, **dadurch gekennzeichnet**, daß eine elastische Einrichtung (24) zwischen beiden Schiebern (12, 13) angeordnet ist.

25. Schleuderstreuer nach wenigstens einem der Ansprüche 3 bis 24, **dadurch gekennzeichnet**, daß das erste Bedienungselement (16, 18, 19) zur schlagartigen Verstellung des ersten Schiebers (12; 86; 182) ausgebildet ist.

26. Schleuderstreuer nach wenigstens einem der Ansprüche 3 bis 25, **dadurch gekennzeichnet**, daß das zweite Bedienungselement zur stufenlosen Verstellung des zweiten Schiebers ausgebildet ist.

27. Schleuderstreuer nach wenigstens einem der Ansprüche 1 bis 26, **dadurch gekennzeichnet**, daß die Fernbedienungsvorrichtungen (16, 18, 19; 22; 37 bis 41; 186, 187; 193, 194) von einem den Schleuderstreuer tragenden bzw. ziehenden Schlepper aus betätigbar sind.

28. Schleuderstreuer nach wenigstens einem der Ansprüche 1 bis 27, **dadurch gekennzeichnet**, daß die den beiden Verteilorganen zugeordneten Schieberanordnungen (12, 13; 86, 90, 92; 182, 183) mittels der jeweiligen Fernbedienungsvorrichtung unabhängig voneinander verstellbar sind.

29. Schleuderstreuer nach Anspruch 28, **dadurch gekennzeichnet,** daß auf dem Schlepper wenigstens ein der Fernbedienungsvorrichtung zugeordnetes Anzeigeelement angebracht ist.

30. Schleuderstreuer nach Anspruch 29, **dadurch gekennzeichnet,** daß auf dem Anzeigeelement die Stellung der Schieberanordnungen ablesbar ist.

31. Schleuderstreuer nach Anspruch 29 oder 30, **dadurch gekennzeichnet,** daß auf dem Anzeigeelement die jeweils eingestellte Öffnungsweite der Auslauföffnung ablesbar ist.

## Claims

1. Broadcaster, preferably an attachable-type broadcaster more especially for granular fertilizers, including a storage container (4), which is provided with outlet apertures (11), and a distribution arrangement having two driven distributing members (9), to which the materials to be distributed are feedable via at least one respective outlet aperture (11), which is closable by at least one slider arrangement, comprising a first slider (12, 86, 182) and a second slider (13, 90, 92, 183), and which aperture is adjustable to various widths of opening, the sliders being adjustable relative to each other and being movable into the closed position and into open positions by means of a remote control device, characterised in that the remote control device includes Bowden cables or hydraulically or electrically actuatable lifting cylinders or electric setting motors in order that the sliders can be adjusted from the tractor seat relative to each other during the travel movement, in that a mechanically adjustable means (28) is provided, which sets the maximum opening position of the first slider (12), in that resilient means (24) or stop members are provided, which set the second slider (13) whilst setting the basic width of opening of the outlet aperture (11), in such a manner that it has a slider edge, which is situated beneath the outlet aperture (11) and co-determines the width of opening of the outlet aperture, and in that the width of opening of the outlet aperture is increasable or decreasable by relative adjustment of the second slider.

2. Broadcaster according to claim 1, characterised in that the sliders (12, 13; 86, 90, 92; 182, 183) of each slider arrangement co-operate with each other to set the width of opening of the outlet aperture (11; 85; 93; 181) and are adjustable into a basic open position via the remote control device, and in that one of the sliders (13; 90, 92; 183) is adjustable into at least two additional open positions by means of the remote control device, the widths of opening of the outlet apertures in one additional open position being smaller than in the basic open position and being greater than in the basic open position in the other additional open position.

3. Broadcaster according to claim 2, characterised in that the remote control device (16, 18, 19; 22; 37 to 41; 186, 187; 193, 194) includes a first operating member (16, 18, 19; 186, 187) for moving the first slider (12; 86; 182) into the basic open position, and a second operating member (22; 37 to 41; 193, 194) for moving the second slider (13; 183) into the additional open positions.

4. Broadcaster according to claim 3, characterised in that the first operating member (16, 18, 19; 186) includes a hydraulic cylinder (16), which acts in a direction towards the closed position of the slider arrangement, and a tension spring (18) which acts in a direction towards the open position of the slider arrangement.

5. Broadcaster according to at least one of claims 3 to 4, characterised in that the second operating member (91, 95) is a Bowden cable.

6. Broadcaster according to at least one of claims 3 to 5, characterised in that the second operating member (22; 37 to 41; 193, 194) includes an adjusting member (22; 37; 193).

7. Broadcaster according to claim 6, characterised in that the adjusting member (22; 37; 193) interconnects both sliders (12, 13; 182, 183).

8. Broadcaster according to at least one of claims 2 to 7, characterised in that an adjustable stop means (28; 89; 94; 190) is provided for setting the basic open position of the slider arrangement (12, 13; 86, 92; 182, 183).

9. Broadcaster according to claim 8, characterised in that the stop means (28; 89; 190) is a stop member (28; 89; 190), which co-operates with the first slider (12; 86; 182).

10. Broadcaster according to claim 8, characterised in that the stop means (94) is a stop member (94), which co-operates with the first slider (86), and is a stop (94) which co-operates with the second slider (92).

11. Broadcaster according to at least one of claims 8 to 10, characterised in that the stop means (28; 89; 94; 190) is adjustably mounted on a base plate (6; 84; 180), which is provided with the outlet aperture (11; 85; 93; 181).

**12.** Broadcaster according to at least one of claims 2 to 11, characterised in that an additional, adjustable stop means (25; 94) is provided for setting the additional open positions of the second slider (13; 90; 92).

**13.** Broadcaster according to claim 12, characterised in that the additional stop means (25; 94) includes two additional stop members (25; 94), which co-operate with the second slider (13; 92).

**14.** Broadcaster according to claim 13, characterised in that the additional stop members (94) are adjustably mounted on the base plate (84).

**15.** Broadcaster according to claim 12, characterised in that the additional stop members (25) are adjustably mounted on the first slider (12) or on the second slider (13).

**16.** Broadcaster according to at least one of claims 6 to 15, characterised in that the adjusting member (193) is an electric lifting cylinder or setting motor.

**17.** Broadcaster according to at least one of claims 6 to 16, characterised in that the adjusting member (23) is a hydraulic lifting cylinder.

**18.** Broadcaster according to claim 16 or 17, characterised in that the lifting cylinders have two different operational speeds.

**19.** Broadcaster according to at least one of claims 6 to 18, characterised in that the adjusting member takes the form of electric lifting magnets (37).

**20.** Broadcaster according to at least one of claims 1 to 19, characterised in that both sliders (12, 13; 182, 183) are disposed directly one above the other beneath the outlet aperture (11, 181).

**21.** Broadcaster according to at least one of claims 1 to 19, characterised in that the first slider (12; 182) is disposed between the second slider (13; 183) and the outlet aperture (11; 181).

**22.** Broadcaster according to at least one of claim 1 to 19, characterised in that the second slider, in the form of a screen element (90), is disposed laterally of the outlet aperture (85).

**23.** Broadcaster according to at least one of claims 1 to 19, characterised in that the second slider is in the form of two screen elements (92), which are disposed laterally of the outlet aperture (93).

**24.** Broadcaster according to at least one of claims 1 to 21, characterised in that a resilient means (24) is disposed between both sliders (12, 13).

**25.** Broadcaster according to at least one of claims 3 to 24, characterised in that the first operating member (16, 18, 19) is provided for the prompt adjustment of the first slider (12; 86, 182).

**26.** Broadcaster according to at least one of claims 3 to 25, characterised in that the second operating member is provided for the stepless adjustment of the second slider.

**27.** Broadcaster according to at least one of claims 1 to 26, characterised in that the remote control devices (16, 18, 19; 22; 37 to 41; 186, 187; 193, 194) are actuatable from a tractor which carries or tows the broadcaster.

**28.** Broadcaster according to at least one of claims 1 to 27, characterised in that the slider arrangements (12, 13; 86, 90, 92; 182, 183), which are associated with the two distributing members, are adjustable independently of one another by means of the respective remote control device.

**29.** Broadcaster according to claim 28, characterised in that at least one indicator, which is associated with the remote control device, is mounted on the tractor.

**30.** Broadcaster according to claim 29, characterized in that the position of the slider arrangements can be read-off on the indicator.

**31.** Broadcaster according to claim 29 or 30, characterised in that each respective width of opening of the outlet aperture which is set can be read-off on the indicator.

**Revendications**

**1.** Epandeur centrifuge de préférence épandeur centrifuge porté, destiné notamment à des engrais en forme de granulés, comportant un réservoir d'alimentation (4) muni d'orifices de sortie (11) et d'un dispositif de distribution à deux organes de distribution (9), entraîné, qui reçoivent les produits à distribuer par au moins un orifice de sortie (11) susceptible d'être fermé ou réglé sur différents degrés d'ouverture par un premier (12, 86, 182) tiroir et un second tiroir (13, 90, 92, 183) formant un dispositif à tiroirs, les tiroirs étant réglables l'un par rapport à l'autre et pouvant être réglés en position de fermeture et dans les positions d'ouverture par un dispositif de télécommande, épandeur caractérisé en ce que le dispositif de télécommande comprend des câbles Bowden ou des vérins hydrauliques ou électriques ou des moteurs de réglage électriques pour permettre de régler les tiroirs l'un par rapport à l'autre à partir du siège du conducteur pendant le déplacement, un élément mécanique réglable (28) fixant la position d'ouverture maximale du premier tiroir (12), des éléments élastiques (24) ou des butées fixant le deuxième tiroir (13) en fixant le degré d'ouverture de base de l'orifice de sortie (11) de façon à présenter un bord de tiroir en-dessous de l'orifice de sortie (11) et définissant le degré d'ouverture de cet orifice de sortie et le réglage relatif du second tiroir augmente ou réduit le degré d'ouverture de l'orifice de sortie.

2. Epandeur centrifuge selon la revendication 1, caractérisé en ce que les tiroirs (12, 13, 86, 90, 92 ; 182, 183) de chaque dispositif à tiroirs coopèrent pour fixer le degré d'ouverture de l'orifice de sortie (11, 85, 93 ; 181) et sont réglables dans une position de base par le dispositif de télécommande et en ce qu'en outre l'un des tiroirs (13, 90, 92 ; 183) peut être réglé par le dispositif de télécommande dans au moins deux positions d'ouverture supplémentaires, les degrés d'ouverture des orifices de sortie étant, dans l'une des positions d'ouverture supplémentaires, plus petits et dans l'autre plus grands que dans la position d'ouverture de base.

3. Epandeur centrifuge selon la revendication 2, caractérisé en ce que le dispositif de télécommande ( 16, 18, 19 ; 22 ; 37-41 ; 186, 187 ; 193, 194) comprend un premier élément de manoeuvre 16, 18, 19 ; 186, 187) pour régler le premier tiroir (12 ; 86 ; 182) dans la position d'ouverture de base et un second élément de manoeuvre (22 ; 37-41 ; 193, 194) pour régler le second tiroir (13 ; 183) dans les positions d'ouverture supplémentaires.

4. Epandeur centrifuge selon la revendication 3, caractérisé en ce que le premier élément de manoeuvre (16, 18, 19 ; 186) comprend un vérin hydraulique (16) agissant dans le sens de la position de fermeture du dispositif à tiroirs et un ressort de rappel (18) agissant dans le sens de la position d'ouverture du dispositif à tiroirs.

5. Epandeur centrifuge selon au moins l'une des revendications 3 et 4, caractérisé en ce que le second élément de manoeuvre (91, 95) est un câble Bowden.

6. Epandeur centrifuge selon au moins l'une des revendications 3-5, caractérisé en ce que le second élément de manoeuvre (22 ; 37-41 ; 193, 194) comprend un élément de réglage (22 ; 37 ; 193).

7. Epandeur centrifuge selon la revendication 6, caractérisé en ce que l'organe de réglage (22 ; 37 ; 193) relie les deux tiroirs (12, 13 ; 182, 183).

8. Epandeur centrifuge selon au moins l'une des revendications 2 à 7, caractérisé par un dispositif de butée (28 ; 89 ; 94 ; 190) réglable pour fixer la position d'ouverture de base du dispositif à tiroirs (12, 13 ; 86, 92 ; 182, 183).

9. Epandeur centrifuge selon la revendication 8, caractérisé en ce que le dispositif de butée (28 ; 89 ; 190) est réalisé sous la forme d'un élément de butée (28 ; 89 ; 190) coopérant avec le premier tiroir (12 ; 86 ; 182).

10. Epandeur centrifuge selon la revendication 8, caractérisé en ce que le dispositif de butée (94) est un élément de butée (94) coopérant avec le premier tiroir (86) et une butée (94) coopérant avec le second tiroir (92).

11. Epandeur centrifuge selon au moins l'une des revendications 8 à 10, caractérisé en ce que le dispositif de butée (28 ; 89 ; 94 ; 190) est fixé de manière réglable à une plaque de fond (6 ; 84 ; 180) comportant l'orifice de sortie (11 ; 85 ; 93 ; 181).

12. Epandeur centrifuge selon au moins l'une des revendications 2 a' 11, caractérisé par un dispositif de butée réglable supplémentaire (25 ; 94) pour fixer les positions d'ouverture supplémentaires du second tiroir (13 ; 90 ; 92).

13. Epandeur centrifuge selon la revendication 12, caractérisé en ce que le dispositif de butée supplémentaire (25 ; 94) comporte deux éléments de butée (25 ; 94) supplémentaires coopérant avec le second tiroir (13 ; 92).

14. Epandeur centrifuge selon la revendication 13, caractérisé en ce que des éléments de butée supplémentaires (94) sont fixés de manière réglable à la plaque de fond (84).

15. Epandeur centrifuge selon la revendication 12, caractérisé an ce que les éléments de butée supplémentaires (25) sont fixés de manière réglable sur le premier tiroir (12) ou sur le second tiroir (13).

16. Epandeur centrifuge selon au moins l'une des revendications 6 à 15, caractérisé en ce que l'élément de réglage (193) est un vérin électrique ou un moteur de réglage.

17. Epandeur centrifuge selon au moins l'une des revendications 6 à 16, caractérisé en ce que l'élément de réglage (23) est un vérin hydraulique.

18. Epandeur centrifuge selon la revendication 16 ou 17, caractérisé en ce que le vérin hydraulique offre deux vitesses de manoeuvre différentes.

19. Epandeur centrifuge selon au moins l'une des revendications 6 à 18, caractérisé en ce que l'élément de réglage est un électro-aimant (37).

20. Epandeur centrifuge selon au moins l'une des revendications 1 à 19, caractérisé en ce que les deux tiroirs (12, 13 ; 182, 183) sont disposés directement l'un au-dessus de l'autre sous l'orifice de sortie (11 ; 181).

21. Epandeur centrifuge selon au moins l'une des revendications 1 à 19, caractérisé en ce que le premier tiroir (12 ; 182) est prévu entre le second tiroir (13 ; 183) et l'orifice de sortie (11 ; 181).

22. Epandeur centrifuge selon au moins l'une des revendications 1 à 19, caractérisé en ce que le second tiroir est prévu à côté de l'orifice de sortie (85) et se présente sous la forme d'un élément de diaphragme (90).

23. Epandeur centrifuge selon au moins l'une des revendications 1 à 19, caractérisé en ce que le second tiroir se présente sous la forme de deux éléments de diaphragme (92) prévus latéralement par rapport à l'orifice de sortie (93).

24. Epandeur centrifuge selon au moins l'une des revendications 1 à 21, caractérisé par un dispositif élastique (24) entre les deux tiroirs (12, 13).

25. Epandeur centrifuge selon au moins l'une des revendications 3 à 24, caractérisé en ce que le premier élément de manoeuvre (16, 18, 19) est conçu pour déplacer très rapidement le premier tiroir (12 ; 86 ; 182).

26. Epandeur centrifuge selon au moins l'une des revendications 3 à 25, caractérisé en ce que le second élément de manoeuvre est conçu pour le réglage en continu du second tiroir.

27. Epandeur centrifuge selon ou moins l'une des revendications 1 à 26, caractérisé en ce que les dispositifs de télécommande (16, 18, 19 ; 22 ; 37-41 ; 186, 187 ; 193, 194) sont actionnés à partir du tracteur portant ou tirant l'épandeur centrifuge.

28. Epandeur centrifuge selon au moins l'une des revendications 1 à 27, caractérisé en ce que les deux organes à tiroirs (12, 13 ; 86, 90, 92 : 182, 183) associés aux deux organes de réglage, sont réglables indépendamment l'un de l'autre à partir du dispositif de télécommande respectif.

29. Epandeur centrifuge selon la revendication 28, caractérisé en ce que le tracteur est équipé d'au moins un élément d'affichage associé au dispositif de télécommande.

30. Epandeur centrifuge selon la revendication 29, caractérisé en ce que la position des dispositifs à tiroirs peut se lire sur l'élément d'affichage.

31. Epandeur centrifuge selon la revendication 29 ou 30, caractérisé en ce que le degré d'ouverture de l'orifice de sortie peut se lire sur l'élément d'affichage.

EP 0 191 374 B1

# FIG.1

# FIG.2

14

# FIG. 3

FIG.4

FIG. 5

FIG. 6

17

FIG. 7

FIG. 8

# FIG. 9

FIG.10